## Europäisches Patentamt
## European Patent Office
## Office européen des brevets

(19)

(11) Publication number: **0 133 255**
**B1**

(12)

# EUROPEAN PATENT SPECIFICATION

(45) Date of publication of patent specification: **22.03.89**

(51) Int. Cl.⁴: **B 60 C 9/20,** B 60 C 9/06, B 60 C 9/09

(21) Application number: **84108587.1**

(22) Date of filing: **20.07.84**

(54) **Motorcycle tyres.**

(30) Priority: **22.07.83 IT 2219083**

(43) Date of publication of application:
**20.02.85 Bulletin 85/08**

(45) Publication of the grant of the patent:
**22.03.89 Bulletin 89/12**

(84) Designated Contracting States:
**AT BE CH DE FR GB LI LU NL SE**

(56) References cited:
**FR-A-1 254 263**
**FR-A-1 522 420**
**FR-A-2 206 200**
**FR-A-2 368 376**
**FR-A-2 380 907**
**GB-A-2 096 951**
**US-A-4 109 696**

**PATENTS ABSTRACTS OF JAPAN, vol. 7, no. 271 (M-260)1416r, 3rd December 1983; JP - A - 58 149 805 (SUMITOMO GOMU KOGYO K.K.) 06.09.1983**

(73) Proprietor: **PIRELLI COORDINAMENTO PNEUMATICI Società per Azioni**
**Piazzale Cadorna, 5**
**I-20123 Milan (IT)**

(72) Inventor: **Mezzanotte, Mario**
**Via Argelati, 28**
**Milan (IT)**

(74) Representative: **Mariani, Giorgio, Dr. et al**
**INDUSTRIE PIRELLI S.p.A. Direzione Brevetti**
**Piazzale Cadorna, 5**
**I-20123 Milano (IT)**

Courier Press, Leamington Spa, England.

## Description

The present invention regards the tyres for vehicle wheels—and more particularly, those tyres destined for being used on motorcycles.

These types of tyres must have a very special structure for supporting conditions of usage that are quite diverse to those to which the normal motor vehicle tyres are subjected. It is enough for example, to cite the fact that these tyres must be capable of travelling with quite high values of the camber angle, normally 40°—45°, but even over 55°—as compared to the maximum values of 3° or 4° for the motor vehicle tyres.

Therefore, this requirement involves—for those tyres destined for motorcycles, the need for having treads that are comparatively wider, or rather more enveloping, than the treads of motor-vehicle tyres, and with there being a pronounced curvature in the crown—i.e. a pronounced curvature of the tread that is contrarily to what is verified in other tyres, whose treads become even more flattened, with having a reduction in the section-height:section-width ratio—commonly known as the H/C ratio.

Moreover, a high stiffness is required in the sidewall, for the purpose of supporting the vehicle during cornering with these high camber angles, and for conferring to the tyre a great directional capacity and a lateral stability during straightaway running at a high speed.

All these difficulties result as being particularly pushed to extremes in the instance of tyres destined for racing on roads or tracks, where their performances are exploited to the maximum limit (camber angle up to 56°) i.e. where the tyres are always utilized at the threshold of the critical conditions of usage.

For all these reasons, to-date the tyres for motorcycles have only been able to utilize crossed-ply carcasses—i.e. with pairs of cord-plies crossed together, at low angular values (20°—30°) with respect to the circumferential direction, since the radial carcasses have resulted as being absolutely unsuited because of their excessive lateral instability in addition to the great flexibility of their sidewalls.

From GB—A—2096951 is known a tyre corresponding to the preamble of claim 1.

The Applicant has now invented a new carcass structure, that can be called 'mixed'—because, although not responding to the characteristics of the crossed carcass, nor presenting the typical structure of the radial carcasses, it has nevertheless managed to combine all the advantages as regards the behaviour of the radial carcasses and all the structural advantages of the crossed carcasses, with sensibly improving the performances of this type of tyre—particularly when utilized for sports or racing competitions.

Hence, what constitutes the object of the present patent is a tyre for motorcycle wheels, according to independent claim 1. This tyre comprises a textile carcass, a tread-band placed in the crown zone of said carcass and having a deflection of a value comprised between 0,20 and 0,35, sidewalls and beads for the anchoring of said tyre on a corresponding mounting-rim, with each bead comprising an annular reinforcing-core, circumferentially inextensible, said carcass comprising at least a pair of plies with their extremities turned-up around said annular reinforcing-core, and provided with cords disposed parallelly to each other in each ply, and crossed with those of the adjacent plies, said cords are symmetrically inclined with respect to the circumferential direction, according to an angle comprised between 50° and 65°, measured on the crown, and that a breaker structure is inserted between said carcass and said tread-band, and that it comprises at least one pair of strips made of textile cords—that are parallel to one another in each strip and crossed with the cords of the adjacent strip, said strips being symmetrically inclined with respect to the circumferential direction, according to an angle comprised between 18° and 25°, measured on the crown.

The cords of said crossed-plies being respectively of synthetic fibres derived from cellulose—in the axially innermost ply, and of aramid i.e. aromatic polyamid—in the axially outermost ply, while the annular reinforcing structure—realized with strips of aramid cords, comprises a further layer, of longitudinally oriented polyamid cords, that is disposed radially outwardly to said strips and with having substantially their same width.

According to a first form of realization of the invention, the carcass comprises only a pair of crossed-plies.

In particular, quite conveniently, the synthetic fibre cords are of rayon, those of polyamid are of nylon, and those of aramid are of a material that is known on the market as Kevlar—a registered Du Pont trademark. As far as concerns the carcass plies, these are symmetrically inclined with respect to the circumferential direction, according to an angle comprised preferably between 55° and 60°.

According to a further preferred form of realization, the carcass is provided with another reinforcing element for the beads, comprising a strip of textile cords flipped-up (in a loop) around said annular reinforcing core, said flipper presenting two skirts of diverse lengths, radially extended towards the outside beyond the extremities of the turn-ups of the crossed-plies, the cords of said strips in said skirts being symmetrically inclined with respect to the radial direction, according to an angle of 45°, but conveniently comprised between 40° and 50°.

Quite advantageously, the skirt of said flipper that is more extended, presents its border at a radial height comprised between 35% and 65% of the height of the tyre sidewall.

The said base structure, with or without said bead reinforcement, can be specialized to advantage, with the insertion of further reinforcing structural elements.

According to a first variation of realization of the invention, said structure comprises at least one further carcass ply provided with cords—preferably of polyamid, disposed radially, and substantially extended from one side to the other of the tyre.

According to a further variation of realization, in each sidewall said carcass comprises an annular profile, having a substantially lenticular cross-section, inserted between said pair of crossed-plies in correspondence of the radially external portion of said sidewall, presenting tapered extremities, radially extended from both the parts towards the tyre bead and towards the breaker structure.

In any case, the present invention will be better comprehended with the aid of the following description and the attached figures, furnished solely by way of non-limiting example and whereby:

Fig. 1 illustrates a cross-section of the tyre of the invention, in a first form of realization;

Fig. 2 illustrates the same cross-section of the tyre of the invention in a preferred form of realization comprising certain variations in the realization with respect to Fig. 1;

Fig. 3 illustrates still a cross-section of the tyre of the invention in a further preferred form of realization for usage in sports and racing competitions.

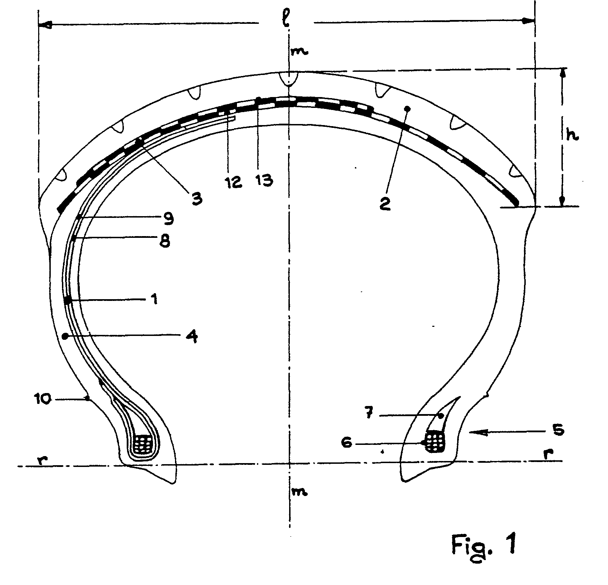

On observing Fig. 1 wherein the elements comprising the structure of the tyre have been partially removed for the purpose of having a greater clarity, it can be noted that the tyre of the invention is substantially comprised by a textile carcass 1, a tread-band 2 disposed in the crown of said carcass, an annular reinforcing structure 3 inserted inbetween said tread-band and said carcass, sidewalls 4, and tyre-beads 5 for anchoring said tyre to its corresponding mounting-rim.

In particular, the said tyre-beads 5 comprise an annular reinforcing core 6, that is generally metallic and usually known as a bead-core, over which there is radially disposed an elastomeric material filler 7 having a high hardness.

On examining the carcass in more detail, it comprises at least one pair of plies 8 and 9, extended from one bead to the other and turned-up around said bead-cores 6, the radial height of the turn-ups of the said plies being rather limited; generally it does not go beyond the limit of the mounting-rim flange—conveniently shown on the tyre sidewall as a slightly raised ridge, in relief 10, that serves also as a point of reference for correctly centering the tyre on the mounting-rim.

The cords of said plies which are parallel to one another in each ply, are crossed with the cords of the adjacent plies, and symmetrically inclined with respect to the tyre's midplane m—m, according to an angle, measured on the finished tyre, having a rather high value—for convenience sake equal to 60°—but comprised between 50° and 65°, and preferably between 55° and 60°.

It is understood that these abovesaid angles are measured on the crown, astride of the equatorial plane of the tyre.

As far as concerns the choice of material which is most suited for the cords of the carcass plies, attention must be paid to the fact that the rubberized fabric out of which said plies are made, must possess a modulus that is not lesser than 200 kg per linear millimetre of the fabric, the value of the modulus can be governed by an opportune choice of the type of cords as well as the density of the cords in the fabric, as orientated in the order of about 100 threads/dm.

Quite conveniently moreover, the cords of the said plies are chosen from diverse materials—depending upon the position of the plies in the structure. More precisely speaking, the cords of the axially inner ply 8 are made out of a synthetic fibre derived from cellulose—for example, of rayon, while those of the axially outer ply 9 are made of aromatic polyamid or aramid—better known under the name Kevlar—a registered Du Pont trademark.

The annular structure 3, placed in the crown of said carcass, comprises a pair of strips 12 and 13, whose width substantially determines the width of the tread, and whose profile progressively draws away from the profile of the carcass plies, proceeding towards the extremities of said structure—which, from now on in this text, shall be referred to as the 'belt' structure.

Quite usefully, the sidewall 4 has its radially outer portion inserted into the space created between carcass and belt, with thus exercising an efficacious supporting action for the belt extremities. The cords of said strip, which are textile and preferably made of aromatic polyamid—i.e. of the already mentioned Kevlar, are parallel to one another in each strip, crossed with the adjacent strips and symmetrically inclined according to an angle of 22°, but comprised between 18° and 25°, with respect to the equatorial plane of the tyre.

Even these angles are intended to be measured on the tyre crown, astride of the above-said equatorial plane.

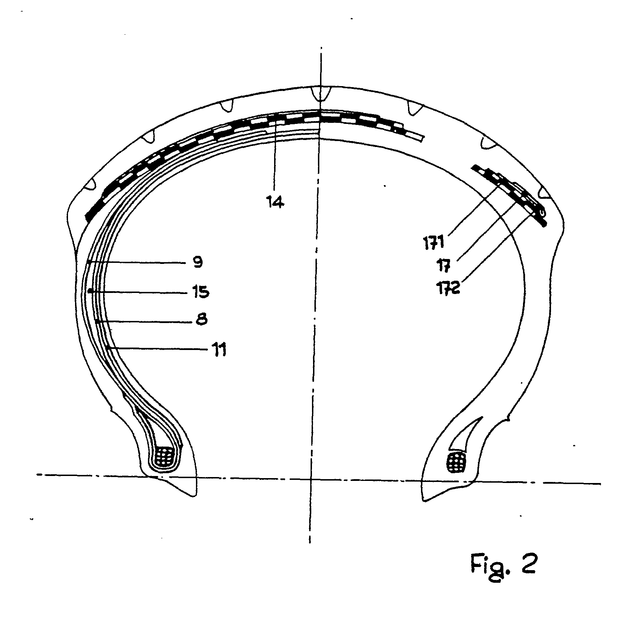

According to a more particular preferred form of realization as seen illustrated in Fig. 2, there is disposed a further layer 14 that radially overlaps this pair of crossed-cord strips, which is substantially as wide as the underlying layers (the variations in width are in the order of about the usual staggering had between the edges of superimposed layers) provided with textile cords disposed longitudinally—i.e. parallelly to the equatorial plane of the tyre.

The cords of said layer 14 at 0° are preferably of polyamid—for example, of nylon.

As an alternative to the above-said layer, other variations of realization are also possible; for example, the layer 14 of cords at 0° could also be substantially wider than the underlying strips of crossed-cords and can present their extremities i.e. those portions exceeding the width of the underlying belt structure, as turned-up axially towards the inside, both in the radially outer position as well as in the radially inner position.

However, it is not obligatory for the folded edge of these turn-ups to coincide with the edges of the underlying strips, since they can be found either in the axially outer position or in the axially inner position, with respect to it.

According to another form of realization, the central portion of said layer 14 results as being lacking—so much so that the belt structure, in its complex whole, just presents one winding 17, single or in several radially overlapping layers (171, 172), disposed on each extremity of the pair of inclined cord strips, as illustrated in the righthand portion of Fig. 2.

It is clear that, owing to the effect of the longitudinal orientation of the cords, in the finished tyre the said turn-ups of said outer layer radially overlapping the belt extremities, can be considered, in the finished tyre, to be the zones of a single layer in which the cords at 0° are disposed so as to have a greater density at the sides with respect to the centre of said layer.

As already anticipated at the beginning of the present description, the motorcycle tyres for which the instant invention is particularly intended, present a tread that is comparatively much more enveloping with respect to the tread of motorcar tyres, with having a pronounced curvature in the crown.

In particular, said curvature is expressed here as a value of the deflection "f"—i.e. of the $h/l$ ratio, where $h$ represents the radial height of the belt, that generally coincides with that of the tread, and $l$ represents the maximum width of the tread as illustrated in Fig. 1. For the tyres of the invention, the value of "f" results as being comprised between 0,20 and 0,35.

The tyre just described, can be greatly specialized with the addition of further structural elements. According to a first variation of realization (Fig. 2) in an axially inner position to said bundle of crossed-cord plies, there is disposed at least one further ply 11, extending from one sidewall to the next of the tyre, the cords of which are made of polyamid for convenience sake: for example, of nylon. These cords are disposed radially—i.e. oriented at 90° with respect to the said mid-plane m—m of the tyre.

When present, said ply must not be turned-up around the bead-cores, but preferably, it will extend from bead-heel to bead-heel, till reaching the radially outermost extremity of said bead-cores.

Again in Fig. 2, there is illustrated a second preferred variation of realization for the tyre of Fig. 1.

In said variation, between the plies 8 and 9 of crossed-cords, in the radially outer portion of the sidewall, there has been inserted an annular elastomeric material profile 15—having a lenticular cross-section, with its extremities tapered, extending radially towards the bead-heels and towards the belt extremity. The thickness of said profile can be orientatively chosen from between one to six times the thickness of the carcass plies. And so also, the hardness, of the elastomeric material out of which the profile is constituted, can vary within ample limits—orientatively between 40° and 90° of Shore-A hardness.

The advantages had with this profile are multiple. Among these, as the chief advantages, there can be cited: the greater stiffness conferred to the sidewall—without however compromising its flexibility and riding comfort; the maintenance, even under tedious conditions of exercise, of an optimal profile for the carcass plies—so reducing the strains and wearing-out of the cords in the said plies, and the increased capacity of the tyre to be self-supporting.

It must also be stressed that the usage of said profile in the tyres of the invention, has been made possible only after the adoption of a well-defined, limited and critical field of variableness for the angles of the crossed-cords in the carcass plies—and precisely, in the previously cited range. In fact, in the tyres of the state of the art, the insertion of this profile in-between the carcass plies would cause distortions in the geometry of the cords and unbalanced systems of strains in the plies—owing to the effects of the reciprocal de-coupling between said plies due to the thickness of the profile, with generating ruinous effects in the tyre behaviour during exercise.

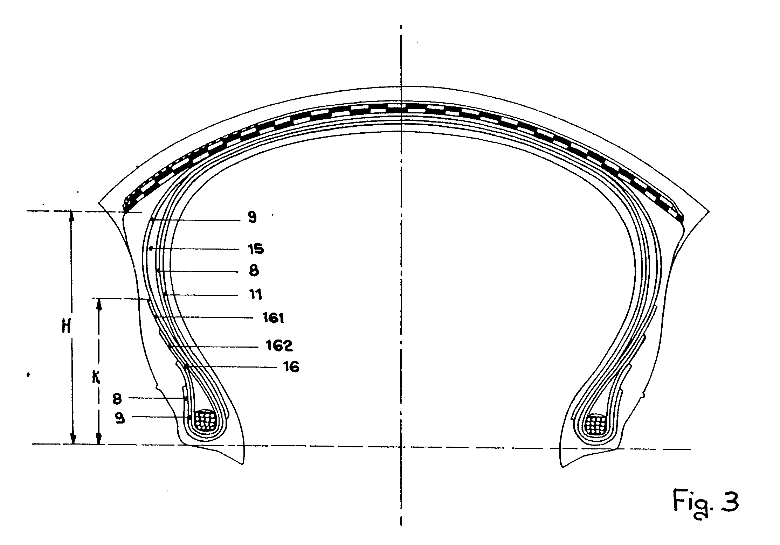

To end with, Fig. 3 illustrates, also in a cross-section, a diverse form of realization for the tyre of the invention, that proves to be particularly advantageous whenever the tyre is utilized for sports and racing events and especially for public games.

It can be noted that, for such usages, the radially outer profile of the tread has also been conveniently modified with respect to the version normally used—i.e. it is shaped to have a sharp corner at the extremity, for allowing the driver—before he actually loses control of the vehicle itself, to appreciate the fact that the angle of inclination of the vehicle—i.e. the camber angle, has reached the maximum value admissible.

Apart from the above-said modifications, in this further form of realization, the tyre bead has been conveniently stiffened through the means of a loop 16, realized with a strip of aromatic polyamid cords, for convenience sake of Kevlar, wound around said bead-core and said filler.

The two skirts 161 and 162 of the loop, present diverse lengths—so as to have their extremities distributed at two diverse heights along the radial development of the sidewall—and however, at a height that is greater than that of the turn-ups of the carcass plies. Moreover, the cords of the strip result as being disposed in the two skirts, symmetrically inclined with respect to the radial direction according to an angle of 45° for convenience sake—but comprised between 40° and 50°.

According to a preferred variation of realization, the radially more extended skirt—which can be the one (161) in the axially innermost position as in Fig. 3, but could also be the one (162) in the axially outer position, has its extremity at a height $k$ comprised between 65% and 35% of the height of the tyre sidewall, and preferably, whenever foreseen, it overlaps—for a tract of not lesser than the usual staggering, orientatively 5 mm, the radially inner extremity of the annular profile 15.

By the 'height of the sidewall' is intended the height $H$ of the portion comprised between the base heel (line $r$ in Fig. 1) and belt extremity (see Fig. 3).

In any case, it must be observed that the variations of realization just described—both the one relative to the radial ply, as well as the one regarding the annular profile and so also the one relative to the loop, are not expressly connected to any specific usage, for example, sports, but they are accessory characteristics in relation to Fig. 1, which can exist either independently one from the other, or even co-exist, precisely as in the case illustrated in Fig. 3.

The tyre of the invention has shown itself apt for effectuating a notable series of advantages with respect to the known tyres of the state of the art, that have a crossed-ply carcass.

In particular, it possesses a greater lateral stability, that eliminates the well-known 'oscillations' of the vehicle when curving, a greater circumferential stiffness which allows for the transmission of greater acceleration and deceleration torques, a greater shear stiffness, which allows among other things, for travelling in curves with camber angles having a higher value than those normally utilized—and hence, with lesser drift, with all the road-gripping advantages and also a greater driving precision that is had even at high speeds.

The motive for which it has been possible to achieve such results, have not to be attributed certainly to one characteristic rather than to another, but the Applicant holds—without wishing by this to in any way limit what concerns the invention, that they are due to the sum-total of circumstances that are linked together. In particular, the use of angles which are very high for the pair of crossed cords plies and comprised in a well-defined range of values, has allowed for the said plies to work dis-jointedly among themselves, in an orthotropal manner and not with the need for having any reciprocal connection—as would be the case if the angle of inclination for the cords, with respect to the equatorial plane of the tyre, had a value lesser than that of the above-defined range of critical limits.

On the contrary, it has already been stated that, for those angles having values higher than the critical limit, the tyre would manifest the unacceptable phenomenon of having lateral instability during straightaway running.

As already anticipated, this de-coupling has permitted the usage of diverse materials for the cords of said plies, for example, the already known rayon and Kevlar cords, as well as the inserting of an elastomeric material profile between said plies. All these provisions are not realizable with the usual crossed-ply tyres of the state of the art, because they would suffer a decadence in their qualitative behaviour characteristics.

So also, the high value of the angle of said crossed plies allows probably for the annular reinforcing structure, placed in the carcass crown, to carry on to a maximum degree, its positive effect, so that the tyre of the invention has proved to sum up both, the structural excellence of the tyres having a crossed-ply carcass, as well as the behaviour qualities of the radial structures, with obviating the respective defects—which, on the contrary, are connected with the known tyres and which are even an impediment for adopting the purely radial structures in this type of tyre.

In particular, when used for public sports on race-tracks, the tyre of the invention has permitted the using of higher straightaway speeds and a greater acceleration and deceleration during curving with high camber values, with thus obtaining a time-saving in the order of about a half-second per every kilometer travelled, clearly outdistancing in this way the best competitor, his immediate pursuer.

To end with, an aspect that is of less importance, but not negligible, is that all the above-said advantages have been obtained without sacrificing the riding comfort with respect to the known tyres—and such a characteristic is quite appreciated in instances of long travelling on normal roads and with tyre structures that are lighter with respect to the usual structures.

## Claims

1. Tyre, for motorcycle wheels, comprising a textile carcass (1), a tread-band (2) placed in the crown of said carcass, and having a deflection (f) in the range of values comprised between 0.20 and 0.35, sidewalls (4) and beads (5) for anchoring said tyre to a corresponding mounting-rim, each bead comprising an angular reinforcing core (6) that is circumferentially inextensible, said carcass comprising at least a pair of plies (8, 9), with their extremities turned-up around said annular reinforcing cores (6) of the beads (5), and provided with reinforcing cords disposed parallelly to each other in each ply and crossed with those of the adjacent ply or plies, said reinforcing cords are being symmetrically inclined with respect to the circumferential direction according to a first angle not greater than 75°, measured in the crown, the reinforcing cords of the plies (8, 9) being of a group of fibres comprising synthetic fibres made from cellulose, and of aromatic polyamide, and an annular reinforcing breaker structure (3) being inserted in-between said carcass and said tread-band and comprising at least one pair of strips (12, 13) of textile cords, parallel to each other in each strip and crossed with the cords of the adjacent strip or strips, symmetrically inclined with respect to the circumferential direction, according to a second angle less than the first angle, characterized measured in the crown zone, characterized by the fact that said first angle is comprised between 50° and 65°, that said second angle is comprised between 18° and 25°, and that the reinforcing cords of the inner ply (8) (are) of synthetic fibres made from cellulose, whereas the reinforcing cords of the outer ply (9) are of aromatic polyamide.

2. Tyre, according to Claim 1, characterized by the fact that said carcass comprises only one pair of crossed plies.

3. Tyre, according to Claim 1, characterized by the fact that said carcass comprises at least one further ply (11) of cords disposed radially, substantially extended from one sidewall to another of said tyre.

4. Tyre, according to Claim 3, characterized by the fact that said further radial ply (11) is disposed in an axially inner position with respect to said pair of crossed plies (8, 9), and that it extends from bead to bead.

5. Tyre, according to Claim 3, characterized by the fact that the cords of said further radial ply (11) are made of polyamid.

6. Tyre, according to Claim 1, characterized by the fact that the cords of said strips (12, 13), in the annular reinforcing structure, are of aràmid.

7. Tyre, according to Claim 1, characterized by the fact that said reinforcing structure comprises at least a further layer (14) of polyamid cords, orientated longitudinally, radially outside said strips and having substantially their same width.

8. Tyre, according to Claim 1, characterized by the fact that said carcass comprises a reinforcing element at the beads (5), said reinforcing element comprising an additional strip (16), of textile cords, that is turned-up in a flipper around said annular reinforcing core (6), and presenting two skirts (161, 162) of diverse lengths, radially extended outwardly to beyond the extremity of the turn-ups of said crossed plies (8, 9).

9. Tyre, according to Claim 8, characterized by the fact that the cords of said additional strip (16), in said skirts (161, 162), are symmetrically inclined with respect to the radial direction, according to an angle comprised between 40° and 50°.

10. Tyre, according to Claim 8, characterized by the fact that the cords of said additional strip (16) are of aramid.

11. Tyre, according to Claim 8, characterized by the fact that the extremity of the radially outermost skirt (161), is found at a point (k) comprised between 65% and 35% of the height (H) of said sidewall (4).

12. Tyre, according to Claim 1, characterized by the fact that for each sidewall said carcass comprises an annular profile (15) having a substantially lenticular cross-section, and inserted in-between said pair of crossed-cord plies (8, 9) in correspondence of the radially outer portion of said sidewalls, and presenting tapered extremities that are radially extended from both the parts towards the bead and towards said annular reinforcing breaker structure (3).

13. Tyre, according to Claims 11 and 12, characterized by the fact that the skirt (161) of said additional strip (16), which is radially more extended, surmounts the tapered extremity that is radially inside of said annular profile (15).

14. Tyre, according to Claim 12, characterized by the fact that the maximum thickness of said profile (15), is comprised between one and six times the thickness of said carcass plies (8, 9).

15. Tyre, according to Claim 1, characterized by the fact that the angle of inclination of the cords of said carcass plies (8, 9), measured in the crown, is comprised between 55° and 60°.

16. Tyre, according to Claim 1, characterized by the fact that the said annular reinforcing breaker structure (3) comprises a further layer (14) of polyamide cords, oriented longitudinally, said layer (14) being disposed in the radially outer position with respect to said annular reinforcing breaker structure and presenting its end portions axially turned-up inwardly.

17. Tyre, according to Claim 16, characterized by the fact that the folded-edge of said turned-up portions, coincides with the edges of said pair of strips having crossed-cords.

18. Tyre, according to Claim 1, characterized by the fact that said annular reinforcing breaker structure (3) comprises, in correspondence of each extremity and in a radially outward position to said pair (12, 13) of crossed-cord strips, a further winding of polyamid cords, oriented longitudinally.

**Patentansprüche**

1. Reifen für Motorradräder, umfassend eine Textilkarkasse (1), einen Laufstreifen (2), der in der Krone der Karkasse angeordnet ist und eine Krümmung (f) im Bereich von Werten hat, die zwischen 0,20 und 0,35 liegen, Seitenwände (4) und Wülste (5) zum Verankern des Reifens an einer entsprechenden Montagefelge, wobei jeder Wulst einen ringförmigen Verstärkungskern (6) aufweist, der in Umfangsrichtung undehnbar ist, die Karkasse wenigstens ein Paar von Lagen (8, 9) hat, deren Enden um die ringförmigen Verstärkungskerne (6) der Wülste (5) herumgelegt sind und die mit Verstärkungsschnüren versehen sind, die in jeder Lage parallel zueinander angeordnet sind und diejenigen der benachbarten Lage oder der benachbarten Lagen kreuzen, wobei die Verstärkungsschnüre mit Bezug auf die Umfangsrichtung symmetrisch schräg verlaufen in einem ersten Winkel, der nicht größer als 75° ist, gemessen in der Krone, und die Verstärkungsschnüre der Lagen (8, 9) aus einer Gruppe von Fasern bestehen, die synthetische Fasern aus Cellulose und aus aromatischem Polyamid umfassen, und wobei ein verstärkendes Gürtelgebilde (3) zwischen der Karkasse und dem Laufstreifen eingesetzt ist und wenigstens ein Paar von Textilschnurstreifen (12, 13) aufweist, deren Schnüre in jedem Streifen parallel zueinander verlaufen und die Schnüre des benachbarten Streifens oder der benachbarten Streifen kreuzen sowie mit Bezug zur Umfangsrichtung in einem zweiten Winkel symmetrisch schräg liegen, der kleiner als der erste Winkel ist, gemessen in der Kronenzone, dadurch gekennzeichnet, daß der erste Winkel zwischen 50° und 65° liegt, daß der zweite Winkel zwischen 18° und 25° liegt, und daß die Verstärkungsschnüre der inneren Lage (8) aus synthetischen Fasern aus Cellulose bestehen, wohingegen die Verstärkungsschnüre der äußeren Lage (9) aus aromatischem Polyamid bestehen.

2. Reifen nach Anspruch 1, dadurch gekennzeichnet, daß die Karkasse lediglich ein Paar von sich kreuzenden Lagen aufweist.

3. Reifen nach Anspruch 1, dadurch gekennzeichnet, daß die Karkasse wenigstens eine weitere Lage (11) aus radial angeordneten Schnüren aufweist, die sich im wesentlichen von einer Seitenwand des Reifens zur anderen Seitenwand erstrecken.

4. Reifen nach Anspruch 3, dadurch gekennzeichnet, daß die weitere radiale Lage (11) mit Bezug auf das Paar von sich kreuzenden Lagen (8, 9) in einer axial inneren Position angeordnet ist, und daß sie sich von Wulst zu Wulst erstreckt.

5. Reifen nach Anspruch 3, dadurch gekennzeichnet, daß die Schnüre der weiteren radialen Lage (11) aus Polyamid gebildet sind.

6. Reifen nach Anspruch 1, dadurch gekennzeichnet, daß die Schnüre der Streifen (12, 13) in dem ringförmigen Verstärkungsgebilde aus Aramid gebildet sind.

7. Reifen nach Anspruch 1, dadurch gekennzeichnet, daß das Verstärkungsgebilde wenigstens eine weitere Lage (14) aus in Längsrichtung orientierten Polyamidschnüren radial außerhalb der Streifen aufweist, die im wesentlichen die gleiche Breite wie die Streifen hat.

8. Reifen nach Anspruch 1, dadurch gekennzeichnet, daß die Karkasse an den Wulsten (5) ein Verstärkungselement aufweist, welches einen zusätzlichen Streifen (16) aus Textilschnüren besitzt, der in einem Flipper rund um den ringförmigen Verstärkungskern (6) gelegt ist und zwei Ränder (161, 162) unterschiedlicher Längen darbietet, die sich radial nach außen bis zu einer Stelle jenseits des Endes der herumgelegten Teile der sich kreuzenden Lagen (8, 9) erstrecken.

9. Reifen nach Anspruch 8, dadurch gekennzeichnet, daß die Schnüre des zusätzlichen Streifens (16) in den Rändern (161, 162) mit Bezug auf die radiale Richtung symmetrisch schräg verlaufen in einem Winkel zwischen 40° und 50°.

10. Reifen nach Anspruch 8, dadurch gekennzeichnet, daß die Schnüre des zusätzlichen Streifens (16) aus Aramid gebildet sind.

11. Reifen nach Anspruch 8, dadurch gekennzeichnet, daß das Ende des radial äußersten Randes (161) sich an einer Stelle (K) zwischen 65% und 35% der Höhe (H) der Seitenwand (4) befindet.

12. Reifen nach Anspruch 1, dadurch gekennzeichnet, daß die Karkasse für jede Seitenwand ein ringförmiges Profilstück (15) aufweist, welches im wesentlichen linsenförmigen Querschnitt hat und zwischen das Paar von sich kreuzenden Schnurlagen (8, 9) eingesetzt ist in Entsprechung zu dem radial äußeren Teil der Seitenwände sowie sich verjüngende Enden darbietet, die sich von beiden Teilen radial in Richtung gegen den Wulst und in Richtung gegen das ringförmige verstärkende Gürtelgebilde (3) erstrecken.

13. Reifen nach den Ansprüchen 11 und 12, dadurch gekennzeichnet, daß der Rand (161) des zusätzlichen Streifens (16), der sich radial in größerem Ausmaß erstreckt, über dem sich verjüngenden Ende liegt, welches sich radial einwärts des ringförmigen Profilstücks (15) befindet.

14. Reifen nach Anspruch 12, dadurch gekennzeichnet, daß die maximale Dicke des Profilstücks (15) zwischen dem einfachen und dem sechsfachen der Dicke der Karkassenlagen (8, 9) liegt.

15. Reifen nach Anspruch 1, dadurch gekennzeichnet, daß der Schräglagenwinkel der Schnüre der Karkassenlagen (8, 9), gemessen in der Krone, zwischen 55° und 60° liegt.

16. Reifen nach Anspruch 1, dadurch gekennzeichnet, daß das ringförmige verstärkende Gürtelgebilde (3) eine weitere Lage (14) aus in Längsrichtung orientierten Polyamidschnüren aufweist, diese Lage (14) mit Bezug auf das ringförmige verstärkende Gürtelgebilde in radial äußerer Position angeordnet ist und seine Endteile axial nach innen herumgelegt sind.

17. Reifen nach Anspruch 16, dadurch gekennzeichnet, daß die gefaltete Kante der herumgelegten Teile mit den Kanten des Paares von Streifen übereinstimmt, die sich kreuzende Schnüre haben.

18. Reifen nach Anspruch 1, dadurch gekennzeichnet, daß das ringförmige verstärkende Gürtelgebilde (3) in Entsprechung zu jedem Ende und in einer zu dem Paar (12, 13) von Streifen mit sich kreuzenden Schnüren radial auswärtiger Position eine weitere Wicklung aus Polyamidschnüren aufweist, die in Längsrichtung ausgerichtet sind.

**Revendications**

1. Pneumatique, pour roues de motocyclettes, comprenant une carcasse textile (1), une bande de roulement (2) placée dans la couronne de ladite carcasse et ayant une flèche (f) rentrant dans la gamme de valeurs comprises entre 0,20 et 0,35, des flancs (4) et des talons (5) pour accrocher ledit pneumatique sur une jante de montage correspondante, chaque talon comprenant une tringle annulaire de renforcement (6) qui est circonférentiellement inextensible, ladite carcasse comprenant au moins une paire de plis (8, 9) dont les extrémités sont recourbées autour desdites tringles annulaires de renforcement (6) des talons (5), et qui sont pourvus de câbles de renforcement disposés parallèlement entre eux dans chaque pli et croisant ceux du ou des plis adjacents, lesdits câbles de renforcement étant inclinés symétriquement par rapport à la direction circonférentielle d'un premier angle non supérieur à 75°, mesuré dans la couronne, les câbles de renforcement des plis (8, 9) étant constitués par un groupe de fibres comprenant des fibres synthétiques formées de cellulose et d'un polyamide aromatique, et une structure annulaire de renforcement (3) étant interposée entre ladite carcasse et ladite bande de roulement et comprenant au moins une paire de rubans (12, 13) en câbles textiles, parallèles entre eux dans chaque ruban et croisant les câbles du ou des rubans adjacents, en étant symétriquement inclinés par rapport à la direction circonférentielle, selon un second angle inférieur au premier angle et mesuré dans la zone de couronne, caractérisé en ce que ledit premier angle est compris entre 50° et 65°, en ce que ledit second angle est compris entre 18° et 25° et en ce que les câbles de renforcement du pli intérieur (8) sont formés de fibres synthétiques et de cellulose tandis que les câbles de renforcement du pli extérieur (9) sont formés d'un polyamide aromatique.

2. Pneumatique selon la revendication 1, caractérisé en ce que ladite carcasse comprend seulement une paire de plis croisés.

3. Pneumatique selon la revendication 1, caractérisé en ce que ladite carcasse comprend au moins un autre pli (11) formé de câbles qui sont disposés radialement, en s'étendant sensiblement d'un flanc dudit pneumatique à l'autre.

4. Pneumatique selon la revendication 3, caractérisé en ce que ledit autre pli radial (11) est placé dans une position axialement intérieure par rapport à ladite paire de plis croisés (8, 9) et en ce qu'il s'étend d'un talon à l'autre.

5. Pneumatique selon la revendication 3, caractérisé en ce que les câbles dudit autre pli radial (11) sont formés de polyamide.

6. Pneumatique selon la revendication 1, caractérisé en ce que les câbles desdits rubans (12, 13) se trouvant dans la structure annulaire de renforcement sont formés d'aramide.

7. Pneumatique selon la revendication 1, caractérisé en ce que ladite structure de renforcement comprend au moins une autre couche (14) formée de câbles de polyamide qui sont orientés longitudinalement, radialement sur le côté extérieur desdits rubans et qui ont sensiblement la même largeur.

8. Pneumatique selon la revendication 1, caractérisé en ce que ladite carcasse comprend un élément de renforcement dans les talons (5), ledit élément de renforcement comprenant un ruban additionnel (16) de câbles textiles, qui est enroulé sous forme d'un aileron autour de ladite tringle annulaire de renforcement (6) et qui comporte deux jupes (161, 162) ayant des longueurs différentes, s'étendant radialement vers l'extérieur jusqu'au delà de l'extrémité des parties recourbées desdits plis croisé (8, 9).

9. Pneumatique selon la revendication 8, caractérisé en ce que les câbles dudit ruban additionnel (16) intervenant dans lesdites jupes (161, 162) sont inclinés symétriquement par rapport à la direction radiale, selon un angle compris entre 40° et 50°.

10. Pneumatique selon la revendication 8, caractérisé en ce que les câbles dudit ruban additionnel (16) sont formés d'aramide.

11. Pneumatique selon la revendication 8, caractérisé en ce que l'extrémité de la jupe radialement complètement extérieure (161) est située en un point (14) compris entre 65% et 35% de la hauteur (H) dudit flanc (4).

12. Pneumatique selon la revendication 1, caractérisé en ce que, pour chaque flanc, ladite carcasse comprend un profil annulaire (15) ayant une section droite sensiblement lenticulaire, et interposé entre lesdits plis à câbles croisés (8, 9) de ladite paire en correspondance à la partie radialement extérieure desdits flancs, et présentant des extrémités effilées qui s'étendent radialement depuis lesdites parties en direction du talon et en direction de ladite structure annulaire de renforcement (3).

13. Pneumatique selon les revendications 11 et 12, caractérisé en ce que la jupe (161) dudit ruban additionnel (16), qui a radialement la plus grande étendue, surmonte l'extrémité effilée qui est située radialement sur le côté intérieur dudit profil annulaire (15).

14. Pneumatique selon la revendication 12, caractérisé en ce que l'épaisseur maximale dudit profil (15) est comprise entre une et six fois l'épaisseur desdits plis de carcasse (8, 9).

15. Pneumatique selon la revendication 1, caractérisé en ce que l'angle d'inclinaison des câbles desdits plis de carcasse (8, 9), mesuré dans la couronne, est compris entre 55° et 60°.

16. Pneumatique selon la revendication 1, caractérisé en ce que ladite structure annulaire de renforcement (3) comprend une autre couche (14) formée de câbles de polyamide, orientés longitudinalement, ladite couche (14) étant disposée dans la position radialement extérieure par rapport à ladite structure annulaire de renforcement et comportant des parties extrêmes qui sont recourbées axialement vers l'intérieur.

17. Pneumatique selon la revendication 16, caractérisé en ce que le bord replié desdites parties recourbées coïncide avec les bords de ladite paire de rubans comportant des câbles croisés.

18. Pneumatique selon la revendication 1, caractérisé en ce que ladite structure annulaire de renforcement (3) comprend, en correspondance avec chaque extrémité, et dans une position située radialement vers l'extérieur de ladite paire (12, 13) de rubans à câbles croisés, un autre enroulement de câbles en polyamide qui sont orientés longitudinalement.

Fig. 1

Fig. 2

Fig. 3